# EUROPEAN PATENT APPLICATION

(11) **EP 4 538 018 A1**
(43) Date of publication of application: **16.04.2025**
(21) Application number: 24154634.0
(22) Date of filing: 30.01.2024
(51) Int. Cl.: B29C 49/24, B29C 49/20, A45D 34/00, A45D 40/00

(54) **COSMETIC CONTAINER**

(30) Priority: 11.10.2023 DE 202023105893 U
(71) Applicant: GEKA GmbH, 91572 Bechhofen (DE)
(72) Inventor: Schneider, Fabian Kurt, 91590 Bruckberg (DE); Ziemann, Matthias, 91522 Ansbach (DE)
(74) Representative: Misselhorn, Hein-Martin

(57) **Abstract**

The invention relates to a Cosmetic container with an inner container made of plastic and an outer container with a cavity which the inner container fills substantially completely, the inner container having a bottle neck - integrally formed thereon - that preferably protrudes from the outer container and then carries a closure cap which can be fixed to it, which prevents leakage of the contents of the inner container, wherein the inner container is either frictionally secured to the outer container and/or the inner container engages behind at least one undercut of the outer container , which undercut cannot be made accessible even by dividing the outer container.

## Description

The invention relates to a cosmetic container according to the generic term of claim 1.

### TECHNICAL BACKGROUND

From a hygienic point of view, plastic is by far the most common material for containers that hold a cosmetic mass and are therefore in direct contact with the cosmetic mass.

Alternative materials for such containers have various disadvantages. Wood, for example, is only suitable to a very limited extent, as the cosmetic mass is absorbed into the wood, resulting in negative changes to the properties of the material. Most metals tend to corrode, if they are in permanent contact with the cosmetic mass or have to be treated on the inside (for example coated) in such a way that the production of such a container only makes limited economic sense.

However, there is often a desire to use alternative materials to plastic for parts of the cosmetic container - especially on the visible and tangible outside. This is mainly for design reasons and/or leads to a better feel and/or an increased sense of value for the cosmetic container.

It is currently common practice to design the cosmetic container in several parts and to provide a sleeve (or: outer container) around the actual container (or: inner container) that carries the cosmetic mass, wherein the sleeve largely forms the visible outside of the cosmetic container.

However, this is associated with some disadvantages.

This means an increase in production and assembly costs when manufacturing a cosmetic container. In addition, the design of the cosmetic container is often limited and there are often mechanical problems between the container and the sleeve of the cosmetic container. For example, a snap-in or other connection between the inner container and the outer container is often prone to errors, or the connection in question comes loose unintentionally. It is often even desirable to being able to simply separate this connection in order to make it easy to replace the inner container. However, this often also leads to the problems mentioned above.

### TASK OF THE INVENTION

In the light of the foregoing, it is the object of the invention to provide a cosmetic container which has an inner container made of plastic and an outer container, the inner container and the outer container having a secure connection to one another which can be made in a simple manner.

### THE SOLUTION ACCORDING TO THE INVENTION

This task is solved with the features of claim 1. For this purpose, a cosmetic container -with bottle neck and shoulders or without one or both- with an inner container made of plastic and an outer container with a cavity is proposed, wherein the inner container substantially completely fills this cavity.

The "cavity" here refers to the hollow space inside the outer container. The inner container fills this cavity "substantially" completely if at least 90 percent of the cavity, particularly preferably at least 95 percent of the cavity, is filled by the inner container; particularly preferably, the outer contour of the inner container follows the inner contour of the outer container completely. Direct contact between the outside of the inner container and the inside of the outer container is preferred, although slight residual cavities may occur due to manufacturing inaccuracies and/or due to the properties of the selected manufacturing process of the inner container, particularly in the area of edges or small curves.

Thus, in the vast majority of cases, the outer container is designed in such a way that the inner container can only be inserted into the outer container by its more than insignificant plastic deformation. In addition, the outer container is usually also designed in such a way that the inner container cannot be removed from the outer container without causing damage.

The wall-forming plastic of the inner container typically has a special molecular structure. It consists of a number of aligned or even parallel oriented molecular chains. The particular orientation in question is that which is typically produced by elongating a recipient in a plastic state by blow molding and stretching it in the circumferential direction.

The inner container also has a bottle neck integrally formed on it, which preferably protrudes from the outer container. In the assembled state, this bottle neck then carries a sealing cap that can be attached to it, which prevents the contents of the inner container from leaking out. Preferably, this bottle neck has a thread.

The inner container is either frictionally fixed to the outer container and/or the inner container engages behind at least one undercut of the outer container - which cannot be made accessible by separating the outer container.

This means that the inner container can no longer be removed from the outer container without causing damage. The outer container and the inner container are thus so strongly connected that the inner container can neither be moved translationally nor twisted in relation to the outer container. This ensures a secure connection between these two parts without the risk of unintentional loosening of either part. In addition, the choice of material for the outer container is independent of the fact that plastic is chosen as the material for the inner container.

### PREFERRED DESIGN OPTIONS

A preferred embodiment of the cosmetic container is that the inner container follows the inner contour of the cavity of the outer container as precisely everywhere, as is the case when the inner container has been expanded into the cavity of the outer container in its mostly heated, plastic state by excessive internal pressure. The inner container is therefore essentially in contact with any free inner surface of the outer container. Again, it should be noted that slight residual cavities can still occur, particularly in the area of edges or small curves. This makes it easy to ensure a secure connection between the outer container and the inner container.

In addition, it is particularly preferable if the inner container rests against the inner surface of the cavity of the outer container with permanent pretension on several sides, i.e., the outer container keeps the inner container compressed, i.e., prevents it from expanding completely. The inner container is therefore under tension in such a way that at least the majority of the outer surface forms a spring element that is kept permanently compressed by the outer container. This increases the safety of the connection between the outer container and the inner container, especially if there is no undercut.

Furthermore, it is particularly preferable if the outer container has a profile projecting inwards from the inner surface, which the inner container grips in a form-fitting manner. This is a simple means of providing additional safety against the outer container being pulled out and/or twisting relative to the inner container.

Furthermore, it is particularly preferable if the outer container has an embossing applied by pressure to its outer surface, which forms an inwardly protruding profile on the inner surface of the outer container. This in turn represents a simple means of providing additional security against relative twisting or pulling out of the outer container in relation to the inner container. In addition, the embossing can also serve as a design element of the cosmetic container.

A further preferred embodiment is that the outer container has at least one bottom-side ventilation opening. This ventilation opening exists in addition to the opening in the neck of the bottle and is primarily used to carry out preferred manufacturing processes of the inner container as intended; in particular blow molding.

Furthermore, it is particularly preferable if the ventilation opening has such a small diameter that the inner container cannot pass through the ventilation opening and protrude beyond the outside of the outer container, even if it is expanded tightly into the outer container by a blow molding process. This ensures that the manufacturing process for the inner container can be carried out as intended.

However, it is also conceivable that several ventilation openings are provided on the outer container, into which the inner container bulges during a blow molding process. In this way, the inner container can also be prevented from twisting.

Furthermore, it is particularly preferred if the outer container has at least one window in a wall which limits the expansion of the inner container into the outer container during blow molding, into or through which the inner container can be extruded during blow molding, in the former case preferably so that it at least predominantly fills the window, in the latter case so that it protrudes on the outside of the window. On the one hand, this contributes to additional safety against relative twisting of the outer container in relation to the inner container and, on the other hand, can also serve as an attractive but particularly easy-to-produce design element of the cosmetic container. This at least one window thus only represents an opening through the wall of the outer container and can have various shapes. The at least one window is therefore not limited to a rectangular basic shape, but can also be heart-shaped or star-shaped, for example.

Ideally, the outer container is not itself made of plastic and/or of a temperature-resistant material. In other words, a material that remains dimensionally stable even if it receives more than an insignificant amount of heat from the intimate contact with the hot wall of the inner container during blow molding.

In many cases, it is advantageous if the wall thickness of the outer container is completely or at least predominantly less than that of the inner container.

In some cases, the inner and outer containers both have a bottle neck. It is then advantageous if the bottle neck of the inner container rests against the bottle neck of the outer container so accurately or even prestressed that no substance, in particular no part of the cosmetic mass stored in the container, can penetrate into the gap area between the necks.

Ideally, the same applies only or also for the ventilation hole.

Further possible embodiments, modes of operation and advantages can be seen from the dependent claims and/or the following description of the embodiment examples and/or from the figures.

### FIGURE LIST

Figure 1 shows a schematic side view of a cosmetic container according to the invention without a cap.
Figure 2 shows a cosmetic container according to the invention without a closure cap with embossing on the outer container in sectional side view.
Figure 3 shows a cosmetic container according to the invention without a closure cap with an inwardly protruding profile on the outer container in a sectional side view.
Figure 4 shows a cosmetic container according to the invention without a closure cap with an outer container with windows and an inner container extruded through it in sectional side view.
Figure 5 shows a cosmetic container according to the invention without a closure cap with an outer container with windows and an inner container which has not been extruded beyond the inside of the outer container, in a sectional side view.
Figure 6 shows a cosmetic container according to the invention without a closure cap with an outer container with windows and an inner container which has not been extruded beyond the outside of the outer container, in a sectional side view.
Figure 7 shows a cosmetic container according to the invention without a closure cap with an outer container with windows and an inner container which has not been extruded beyond the inside of the outer container and is also curved inwards, in a sectional side view.
Figure 8 shows a cosmetic container according to the invention without a closure cap with an outer container with a complex window and an inner container in sectional side view.

### PREFERRED EMBODIMENTS

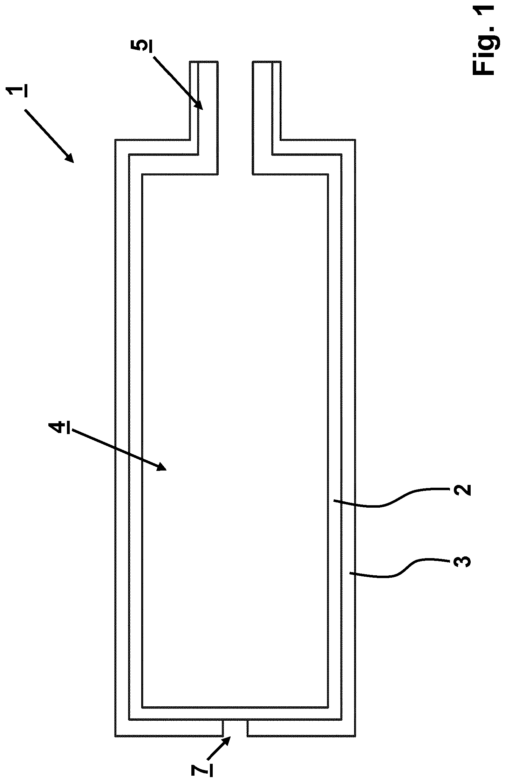

First of all, Fig. 1 schematically shows a cosmetic container 1 according to the invention with an inner container 2 made of plastic and an outer container 3 with a cavity 4. The outer container here preferably has a rotationally symmetrical shape. This cavity 4 is the hollow space inside the outer container 3.

The inner container 2 completely fills this cavity 4 in Fig. 1. This is the idealization of the connection shown between the outer container 3 and the inner container 2. In reality, there are still residual cavities due to manufacturing inaccuracies and/or radii or corners that are too tight. The inner container 2 is preferably frictionally fixed to the outer container 3 and the inner container 2 engages behind an undercut of the outer container.

The inner container 2 preferably has a bottle neck 5 integrally formed on it, which preferably protrudes from the outer container 3. In the schematic example shown in Fig. 1, the bottle neck 5 does not protrude from the outer container 3. It is also preferred that the bottle neck 5 carries a closure cap - preferably by having a thread. This is also more difficult with the bottle neck 5 shown in Fig. 1, but is also possible.

The cosmetic container 1 also has a bottom-side ventilation opening 7, which allows the preferred manufacturing process of the inner container to proceed as intended.

This preferred manufacturing process for all the embodiments shown is blow molding or also injection blow molding for the production of hollow plastic bodies made of thermoplastics such as PET, PVC and PP. Preferably, a preform in the style of a PET blank is used for this purpose, which already has a fastening means for a closure cap - preferably in the form of a thread. This blank is thus preferably expanded into the outer container 3, whereby the inner container 2 follows the inner contour of the cavity 4 of the outer container 3 very precisely everywhere, resulting in a frictional connection, and the inner container 2 rests against the inner surface of the cavity 4 of the outer container 3 on several sides with permanent pretension.

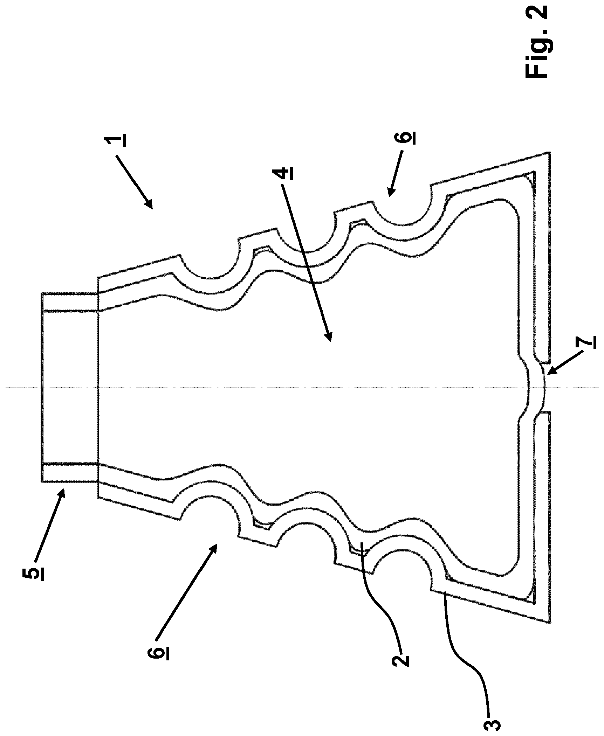

Fig. 2 shows a further example of a cosmetic container 1 manufactured in this way, where the outer container 3 has an embossing applied to its outer surface by pressure, which forms an inwardly protruding profile 6 on the inner surface of the outer container 3. This profile 6 is virtually embraced by the inner container 2, with some residual cavities mentioned being shown in Fig. 2 - particularly in the area of the corners of the inner contour of the outer container 3.

The inner container 2 preferably curves slightly into the ventilation opening 7, but without protruding through it over the outer contour of the outer container 3. As mentioned, a thread is preferably provided in the area of the bottle neck 5.

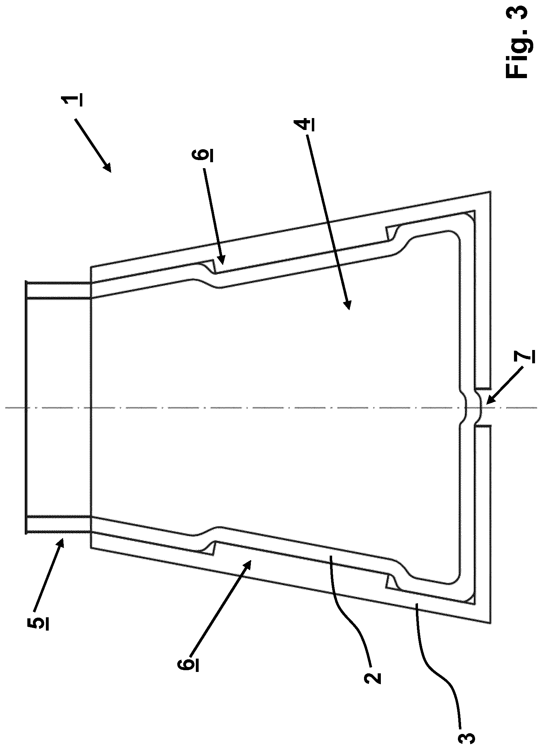

Fig. 3 shows a further example of a cosmetic container 1 analogous to Fig. 2, whereby the residual cavities are also shown here. In contrast to the example in Fig. 2, the outer container 3 here has an inwardly protruding profile 6 on the inner surface, which the inner container 2 grips positively without the outer contour of the outer container 3 being embossed.

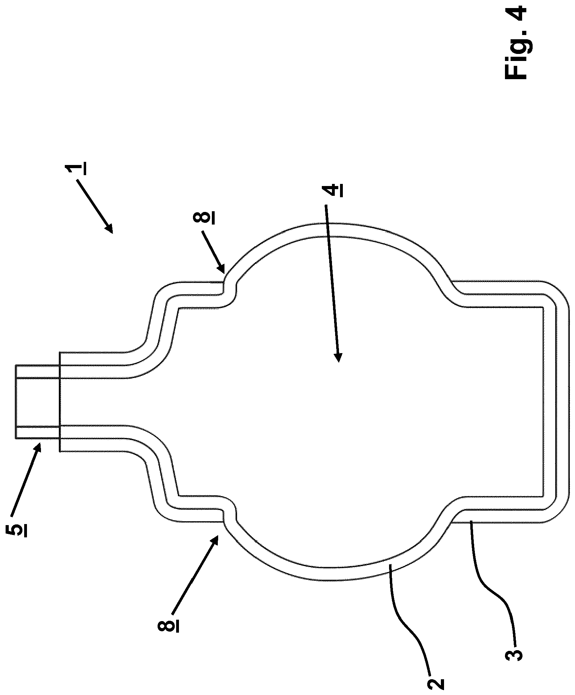

Fig. 4 shows a further example of a cosmetic container 1, in which the outer container 3 has windows 8. These windows 8 are preferably located in a wall that limits the expansion of the inner container 2 into the outer container 3 during blow molding. The inner container 2 is extruded into or through this wall during blow molding. In the former case, preferably in such a way that it at least predominantly fills the window 8, in the latter case in such a way that it protrudes on the outside of the window 8, as also shown in Fig. 4. Due to the window 8, this embodiment example shown does not necessarily require a ventilation opening 7. It may be preferable (e.g., for the manufacture of a perfume container), especially in this variant, to manufacture the inner container from a transparent or crystal-clear plastic.

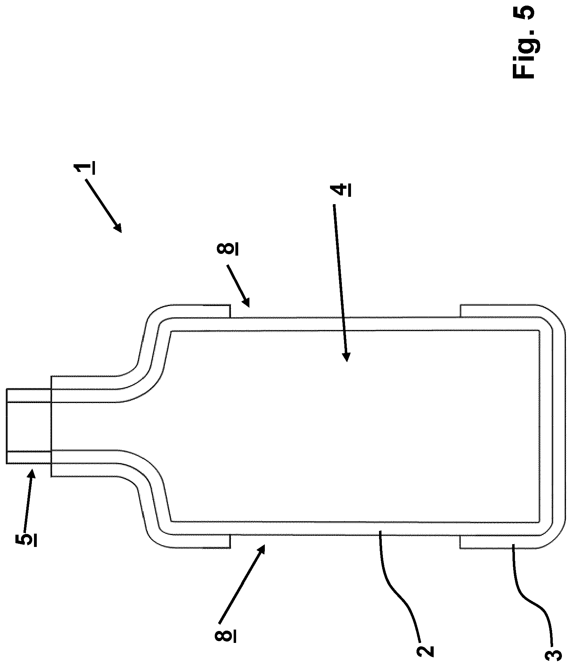

Figures Fig. 5 to Fig. 7 show other possible configurations of the cosmetic container 1 analogous to the cosmetic container shown in Fig. 4.

Figure 5 shows a cosmetic container 1 according to the invention with an outer container 3, which has windows 8. In this example, the inner container 2 has not been extruded beyond the inside of the outer container 3, with the outside of the inner container 2 in the area of the windows 8 even preferably being flush with the imaginary extension of the inside of the outer container 3. This can be achieved, for example, by selecting the material of the inner container 2 and/or the correct blow-out time and/or by using a plunger that protrudes through the windows 8 during the blow-out process in such a way that the inner container 2 abuts against them during the blow-out process.

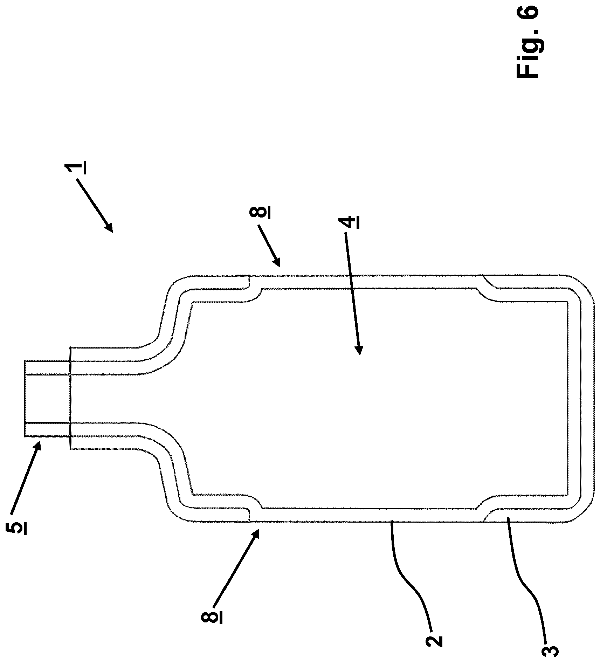

Figure 6 also shows a cosmetic container 1 according to the invention with an outer container 2, which in turn has windows 8. In this example, the inner container 2 has not been extruded beyond the outer side of the outer container 3, whereby the outer side of the inner container 2 in the area of the windows 8 is even preferably flush with the imaginary extension of the outer side of the outer container 3. This can be realized, for example, by selecting the material of the inner container 2 and/or the correct blow-out time and/or by using a plunger that rests against the windows 8 during the blow-out process in such a way that the inner container 2 rests against them during blow-out.

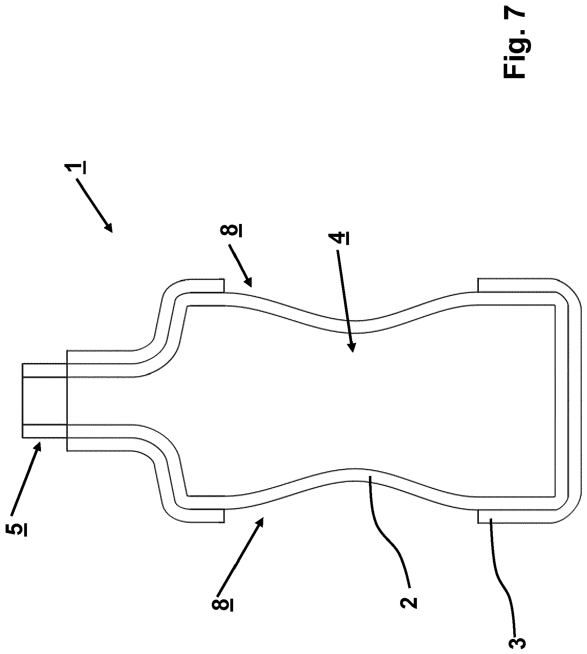

Figure 7 also shows a cosmetic container 1 according to the invention with an outer container 2 with windows 8. In this example, the inner container 2 has not been extruded beyond the inside of the outer container 3 and is also curved inwards. This shape can preferably be realized by using a plunger, which stands through the windows 8 during the blowing process in such a way that the inner container 2 rests against it during blowing.

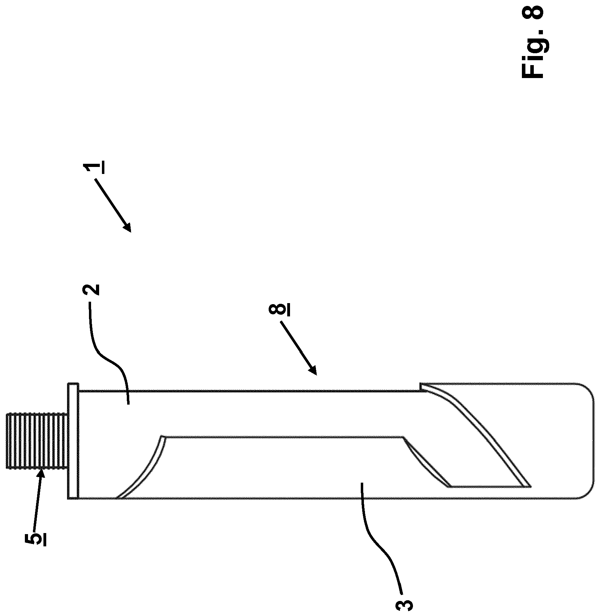

Figure 8 also shows another way in which the cosmetic container 1 can be designed. Here, the outer container 3 has a complex window 8, for example, into or through which the outer container can be expanded. In the example shown, the inner container 2 is not extruded beyond the inside of the outer container 3, analogous to the cosmetic container 1 in Fig. 6. However, this result can also be achieved in other ways, for example by using an application or a sleeve in the blow mold.

In general, the outer container 3 can of course also contain other decorative elements, but these are not shown in the figures for the sake of simplicity. Completely different shapes of the outer container 3 are also possible. The shapes shown in the figures serve only as examples of possible shapes of the outer container 3.

### REFERENCE LIST

- 1: Cosmetic container
- 2: Inner container
- 3: Outer container
- 4: Cavity
- 5: Bottle neck
- 6: Profile
- 7: Ventilation opening
- 8: Window

## Claims

1. Cosmetic container (1) with an inner container (2) made of plastic and an outer container (3) with a cavity (4) which the inner container (2) fills substantially completely, the inner container (2) having a bottle neck (5) - integrally formed thereon - that preferably protrudes from the outer container (3) and then carries a closure cap which can be fixed to it, which prevents leakage of the contents of the inner container (2), wherein the inner container (2) is either frictionally secured to the outer container (3) and/or the inner container (2) engages behind at least one undercut of the outer container (3), which undercut cannot be made accessible even by dividing the outer container (3).

2. Cosmetic container (1) according to claim 1, **characterized in that** the inner container (2) follows the inner contour of the cavity (4) of the outer container (3) everywhere as precisely as is the case when the inner container (2) in its plastic state has been expanded into the cavity (4) of the outer container (3) by excessive internal pressure.

3. Cosmetic container (1) according to claim 1 or 2, **characterized in that** the inner container (2) lies against the inner surface of the cavity (4) of the outer container (3) on several sides with permanent pretension.

4. Cosmetic container (1) according to one of the preceding claims, **characterized in that** the outer container (3) has a profile (6) which projects inwards from the inner surface and which the inner container (2) embraces in a form-fitting manner.

5. Cosmetic container (1) according to the immediately preceding claim, **characterized in that** the outer container (3) has an embossing which is applied to its outer surface by pressure and forms an inwardly projecting profile (6) on the inner surface of the outer container (3).

6. Cosmetic container (1) according to one of the preceding claims, **characterized in that** the outer container (3) has at least one bottom-side ventilation opening (7).

7. Cosmetic container (1) according to the immediately preceding claim, **characterized in that** the ventilation opening (7) has such a small diameter that the inner container (2) cannot pass through the ventilation opening (7) and protrude beyond the outside of the outer container (3), even if it is expanded into the outer container (3) in a close-fitting manner by a blow-molding process.

8. Cosmetic container (1) according to one of the preceding claims, **characterized in that** the outer container (3) has at least one window (8) - in a wall delimiting the expansion of the inner container (2) into the outer container (3) during blow molding - into or through which the inner container (2) can be extruded during blow molding, in the former case preferably in such a way that it at least predominantly fills the window (8), in the latter case in such a way that it protrudes on the outside of the window (8).

9. Cosmetic container (1) according to one of the preceding claims, **characterized in that** the inner container (2) is made of plastic and the outer container (3) is made of any material or a mixture of materials, but preferably plastic and/or metal and/or wood and/or ceramic.

10. Ready-to-use cosmetic unit preferably with an applicator and with a cosmetic container (1) according to one of the preceding claims, **characterized in that** the cosmetic container (1) is filled with cosmetic mass preferably in the form of mascara mass.

11. Production of cosmetic containers (1) comprising an outer container (3) and an inner container (2) made of thermoplastic material, **characterized in that** the inner container (2) is produced by means of injection blow molding in such a way that - and preferably due to appropriately adjusted blowing pressure - the inner container (2) is expanded into the outer container (3), wherein the inner container (2) at least partially follows the inner contour of the cavity (4) of the outer container (3) so precisely everywhere that a frictional connection is made and the inner container (2) lies against the inner surface of the cavity (4) of the outer container (3) on several sides with permanent pretension.

12. Production of cosmetic containers (1) comprising an outer container (3) and an inner container (2) of thermoplastic material, **characterized in that** the inner container (2) is produced by means of injection blow molding, the inner container (2) being extruded into the wall bounding the outer container (3) or being extruded through the wall bounding the outer container (3) - preferably through at least one window (8) in the wall of the outer container (3).

13. Production of cosmetic containers (1) according to one of the two preceding claims, **characterized in that** the inner container (2) is produced by injection blow molding of a preform in the style of a PET blank, the preform already having a fastening means for a closure cap - preferably in the form of a thread.

14. Production of cosmetic containers (1) according to one of the preceding claims, **characterized in that** the inner container (2) is not extruded beyond the inside of the outer container (3) despite the presence of an opening - preferably in the sense of a window (8) - and the inner container (2) is also designed to be curved inwards in sections, a plunger being used for this purpose, which during the blowing-out process stands through the at least one window (8) in such a way that the inner container (2) rests against it during the blowing-out process.
